# EUROPEAN PATENT SPECIFICATION

(11) **EP 3 073 357 B1**
(45) Date of publication and mention of the grant of the patent: **26.06.2019**
(21) Application number: 14863195.5
(22) Date of filing: 28.10.2014
(51) Int. Cl.: G06F 3/044, G06F 3/041

(54) **COMPOSITE POLARIZING PLATE-INTEGRATED TOUCH SENSING ELECTRODE AND TOUCH SCREEN PANEL HAVING SAME**
IN EINE ZUSAMMENGESETZTE POLARISIERENDE PLATTE INTEGRIERTE BERÜHRUNGSEMPFINDLICHE ELEKTRODE UND BERÜHRUNGSBILDSCHIRM DAMIT
ÉLECTRODE DE DÉTECTION TACTILE INTÉGRÉE À UNE PLAQUE DE POLARISATION COMPOSITE ET PANNEAU D'ÉCRAN TACTILE LA COMPORTANT.

(30) Priority: 20.11.2013 KR 20130141669
(43) Date of publication of application: 28.09.2016
(73) Proprietor: Dongwoo Fine-Chem Co., Ltd., Iksan-si, Jeollabuk-do 570-977 (KR)
(72) Inventor: YANG, Min Soo, Anyang-si Gyeonggi-do 431-793 (KR); PARK, Dong Pil, Incheon 406-840 (KR); YOON, Ho Dong, Pyeongtaek-si Gyeonggi-do 451-813 (KR); LEE, Jin Koo, Pyeongtaek-si Gyeonggi-do 451-781 (KR)
(74) Representative: Thoma, Michael
(86) International application number: PCT/KR2014/010144
(87) International publication number: WO 2015/076505

(56) References cited:
- EP-A1- 1 892 609
- EP-A1- 2 648 079
- WO-A1-2011/162414
- JP-A- H11 242 562
- KR-A- 20130 119 658
- KR-B1- 101 065 313
- US-A1- 2001 008 433
- US-A1- 2011 316 846
- US-A1- 2013 194 211
- US-A1- 2013 278 511
- US-A1- 2013 293 096

## Description

### [BACKGROUND OF THE INVENTION]

### 1. Field of the Invention

The present invention relates to a method of manufacturing a touch screen panel including a composite polarizing plate-integrated touch sensing electrode which may be applied to a flexible display and a touch screen panel including the same.

### 2. Description of the Related Art

As parts of a device are decreased in size and reduced in weight with a rapidly developing semiconductor technique as the central figure, a demand for a display device with improved performance is growing explosively in recent years.

Electronic displays for visually transmitting information have appeared in various types of electronic displays according to the information trend. Recently, according to development of mobile communications, development of a portable display is strongly becoming a primary issue in the market.

Such a display device has changed in a sequence of a liquid crystal display (LCD), a plasma display panel (PDP), an organic electro luminescence display (OLED), or the like in accordance with needs of the market. In particular, the liquid crystal display (LCD) has a low consumed power compared to an existing cathode ray tube method, and can be manufactured in a small size, and a thin thickness and light weight, as well as has an advantage that it does not emit hazardous electromagnetic waves. Thereby, the LCD is in the spotlight as a next generation high-tech display, and is mounted and used in almost all of the information processing equipments that require such a display device at present.

Recently, studies into a flexible display which is more thin and lighter than a conventional panel by using a polymer film instead of a glass substrate and can be bent to some degrees are actively conducted.

Such a flexible display may be manufactured in a form of plastic film LCDs, organic ELs, wearable displays, electronic books, electronic paper, or the like, with very wide range of applications. Therefore, the flexible display may also be applied to a product such as a display for a mobile communication terminal, or a display for a portable information communication device, which requires a flexible or various shaped display having high resistance to external shock or vibration, in addition to being thin and light.

On the other hand, a touch screen in which a display panel and touch sensing electrodes are further coupled is becoming popular and used in recent years. Therefore, implementation of a display having a thin structure is gradually a primary concern.

However, in a case of a flexible liquid crystal display, only the material of a currently used substrate is changed from the existing glass substrate to a polymer film, other peripheral parts such as a polarizing plate, backlight, etc., which are required to implement the display, still use the same material and driving method as those applied to the glass substrate.

For example, a conventional liquid crystal display includes a polarizing plate having a thickness of 200 to 400 µm, and a protective layer having a thickness of 25 to 100 µm used for protecting a polarizer, and which are a limitation of a decrease in thickness and size. Due to this disadvantage, there is a difficulty to apply the conventional liquid crystal display to a thin structure such as a card.

In order to solve such a problem, Korean Patent Laid-Open Publication No. 2008-0073252 discloses a technique relating to the flexible liquid crystal display to achieve a thin structure by omitting a protective film contacting a liquid crystal cell, which is a component of a polarizing plate adhered to the liquid crystal cell.

Document US 2013/278511 A1 discloses a flexible touchscreen panel, wherein sensing patterns as a touch sensor are formed on the first surface of a flexible thin film substrate and a coated polarizer layer is formed on the second surface of the thin film substrate. Conductive lines are formed over a non-active region of the first surface of the substrate and are connected to the sensing patterns, wherein a coated polarizer layer is formed over a second surface of the substrate.

US 2013/0293096 A1 shows a flexible touchscreen panel including a substrate, sensing electrodes on at least one surface of the substrate and implemented using an opaque conductive metal, and furthermore a polarizing plate on the substrate having the sensing electrodes formed thereon. The sensing electrodes are in a mesh shape having a plurality of openings.

Furthermore, US 2011/0316846 A1 shows a touch panel for displaying stereoscopic images, including a substrate and a plurality of sensing strings having a plurality of sensing pads in a retarder region.

Further touch sensing devices are known from documents WO 2011/162414 A1, EP 2 648 079 A1, US 2013/194211 A1, EP 1 892 609 A1 and US 2001/008433 A1.

### [SUMMARY OF THE INVENTION]

Accordingly, it is an object of the present invention to provide a method for manufacturing a touch screen panel with touch sensing electrode integrally formed with a polarization plate and a retarder which may be applied to a thin type flexible display.

In addition, another object of the present invention is to provide a method for manufacturing a touch screen panel including the touch sensing electrode having a thin structure and excellent visibility.

The above object of the present invention is achieved by a method for manufacturing a touch screen panel as defined by claim 1, wherein preferred embodiments of the invention are laid down in the dependent claims.

Since the touch sensing electrode layer is directly formed on the composite polarizing plate, there is no need to use a separate substrate for forming the touch sensing electrode thereon, and thereby a thin structure of the flexible display may be obtained.

In addition, since the polarizing plate or the retarder of the composite polarizing plate may be formed and used in a single coating layer, a flexible display having a thin thickness and small size may be obtained.

Further, when the first sensing pattern and the second sensing pattern are formed on different surfaces from each other, the composite polarizing plate may simultaneously perform the function of the insulation layer for the sensing patterns. Therefore, a separate insulation layer is not required, and a bridge electrode for connecting separated sensing electrodes is also not required, and thus a thin structure of the flexible display may be obtained and the manufacturing process may be simplified.

Further, since the refractive index difference between the composite polarizing plate and the sensing pattern has a specific range, it is possible to provide excellent visibility.

Further, since the composite polarizing plate-integrated touch sensing electrode has a thin structure as described above, it may be effectively applied to the flexible display, other than the general display.

Further, since the refractive index difference between the adhesive agent layer and the sensing pattern of the touch sensing electrode has a specific range, it is possible to provide excellent visibility.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic plan view of a composite polarizing plate-integrated touch sensing electrode according to a first specific example of a first embodiment of the present invention;
FIG. 2 is a schematic vertical sectional view of the composite polarizing plate-integrated touch sensing electrode;
FIG. 3 is a schematic vertical sectional view of a structure in which a polarizing plate of a composite polarizing plate is formed of a laminate of a polarizer and a protective film according to a specific example of the first embodiment of the present invention;
FIG. 4 is a schematic vertical sectional view of a structure in which the polarizing plate of the composite polarizing plate is formed of a laminate of the polarizer and the protective film while a laminating sequence thereof is different from that of FIG. 3;
FIG. 5 is a schematic vertical sectional view of a structure in which a retarder of the composite polarizing plate is formed of a laminate of a hardened liquid crystal layer and a base film;
FIG. 6 is a schematic vertical sectional view of a structure in which the retarder of the composite polarizing plate is formed of a laminate of the hardened liquid crystal layer and the substrate while the laminating sequence thereof is different from that of FIG. 5;
FIG. 7 is a schematic vertical sectional view of a composite polarizing plate-integrated touch sensing electrode having a structure in which the laminating sequence thereof is different from that of figure 2;
FIG. 8 is a schematic vertical sectional view of a composite polarizing plate-integrated touch sensing electrode having a structure in which a first sensing pattern and a second sensing pattern are formed on different surfaces of the composite polarizing plate from each other according to a first specific example of a second embodiment of the present invention;
FIG. 9 is a schematic plan view of the composite polarizing plate-integrated touch sensing electrode according to the first specific example of the second embodiment of the present invention; and
FIG. 10 is a schematic vertical sectional view of a structure in which a retarder of the composite polarizing plate is formed of a laminate of a hardened liquid crystal layer and a base film according to a second specific example of the second embodiment of the present invention.

### [DETAILED DESCRIPTION OF THE INVENTION]

The present invention discloses a composite polarizing plate-integrated touch sensing electrode including at least one sensing pattern formed on at least one surface of a composite polarizing plate to which a retarder and a polarizing plate are adhered by a coating method, thereby a thin structure may be implemented, and a touch screen panel including the same.

In the present invention, the composite polarizing plate means an optical functional laminate in which a retarder and a polarizing plate are adhered and integrally formed thereon by the coating method. There may be a structure in which the polarizing plate is coated on the retarder or the retarder is coated on the polarizing plate. In this regard, the retarder or the polarizing plate which is a substrate to be coated also may be another substrate or a coating layer applied to an optical film.

In the present invention, the polarizing plate may be a single polarizer layer or a laminate in which a transparent protective film is adhered to at least one surface of the polarizer. Accordingly, it should be understood that the polarizing plate which will be described below is the single polarizer layer or the laminate having the transparent protective film adhered to at least one surface of the polarizer.

In the present invention, the retarder functions to change a phase of transmitting light. For example, the retarder may be an optical compensation layer for expanding a viewing angle or a quarter wave film layer (λ/4 plate) for anti-reflection. When the composite polarizing plate-integrated touch sensing electrode of the present invention is used in a flexible display, it is preferable that the retarder is the quarter wave film layer.

In the present invention, the retarder may be a single layer or a laminate in which a hardened liquid crystal film is adhered to one surface of a substrate. Accordingly, it should be understood that the retarder which will be described below is the single layer or the laminate having the hardened liquid crystal film adhered to one surface of the substrate.

Hereinafter, exemplary embodiments and examples not covered by the claims of the present invention will be described in detail with reference to the accompanying drawings. However, those skilled in the related art will appreciate that such embodiments and examples not covered by the claims are provided for illustrative purposes and do not limit subject matters to be protected as disclosed in the detailed description and appended claims.

Examples not covered by the claims and first embodiment

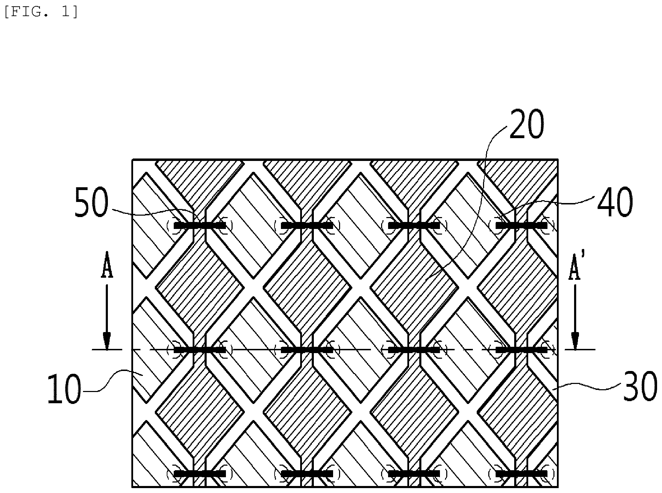

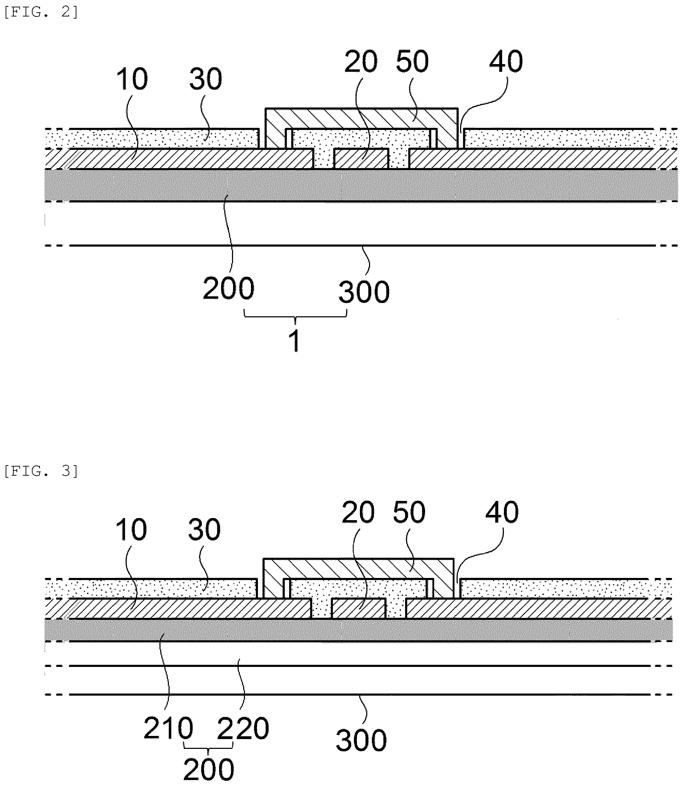

FIGS. 1 and 2 schematically illustrate the composite polarizing plate-integrated touch sensing electrode. As illustrated in FIGS. 1 and 2, the composite polarizing plate-integrated touch sensing electrode of the present invention includes a composite polarizing plate 1, first sensing patterns 10, second sensing patterns 20, an insulation layer 30, and bridge electrodes 50.

In the present invention, a touch sensing electrode is directly formed on the composite polarizing plate without using a separate substrate for forming the touch sensing electrode, thereby a thin structure of a flexible display may be obtained.

The touch sensing electrode includes two types of sensing pattern of an electrode pattern for sensing an X coordinate and an electrode pattern for sensing a Y coordinate. Two types of sensing pattern are formed in different directions from each other. That is, the first sensing patterns 10 and the second sensing patterns 20 are formed in different directions from each other to provide information on X and Y coordinates of a touched point. Specifically, when a finger of a user or an object touches a transparent substrate, a change in capacitance depending on a contact position is detected and transferred to a driving circuit through the first and second sensing patterns 10 and 20, and a position detecting line. Then, the change in capacitance is converted to an electrical signal by X and Y input processing circuits (not illustrated) to identify the contact position.

In this regard, the first and second sensing patterns 10 and 20 have to be formed in the same plane such as one surface of the composite polarizing plate 1, and the respective patterns have to be electrically connected with each other to detect the touched position. However, the second sensing patterns 20 are connected with each other while the first sensing patterns 10 are separated from each other in an island form, thereby additional connection electrodes (the bridge electrodes 50) are needed to electrically connect the first sensing patterns 10 with each other.

However, the bridge electrodes 50 should not be electrically connected with the second sensing patterns 20, and thus, have to be formed in a layer different from the second sensing patterns 20. In order to show such a structure, FIG. 2 illustrates an enlarged view of a portion in which the bridge electrodes 50 are formed in a cross-section taken on line A-A' of FIG. 1.

Referring to FIG. 2, the first and second sensing patterns 10 and 20 formed on the composite polarizing plate 1 are electrically insulated from each other by the insulation layer 30 formed thereon. Herein, as described above, the respective first sensing patterns 10 need to be electrically connected with each other. For this, the bridge electrode 50 is used to electrically connect the respective first sensing patterns 10.

In order to connect the respective first sensing patterns 10, which are separated in the island form, with each other by the bridge electrode 50 while electrically isolated from the second sensing pattern 20, there is a need to form contact holes 40 on the insulation layer 30. After forming the contact holes 40, a separate step of forming the bridge electrode 50 is performed.

Any conventional materials used in the related art may be adopted to the first and second sensing patterns 10 and 20 without particular limitation thereof. In order to prevent the visibility of an image displayed on a screen from being deteriorated, transparent material may be used, or preferably formed in micropatterns. Specifically, a conductive material used for forming the sensing patterns may include, for example, indium-tin oxide (ITO), indium-zinc oxide (IZO), zinc oxide (ZnO), indium-zinc-tin oxide (IZTO), cadmium-tin oxide (CTO), poly(3,4-ethylenedioxythiopene) (PEDOT), carbon nanotube (CNT), metal wire, etc. These may be used alone or in a combination of two or more thereof, and indium-tin oxide (ITO) may be used.

Metals used in the metal wire are not particularly limited but may include, for example, silver (Ag), gold, aluminum, copper, iron, nickel, titanium, tellurium, chromium, etc., which are used alone or in a combination of two or more thereof.

The composite polarizing plate 1 further includes an optical compensation layer such as a hardened liquid crystal layer. Herein, in order to form the first and second sensing patterns 10 and 20 on a polarizer, polarizer protective film, base film, and the optical compensation layer such as a hardened liquid crystal layer, a material having excellent heat resistance may be used as the optical compensation layer material, or the first and second sensing patterns 10 and 20 may be formed by using a printing or a coating method, or a lower temperature process such as a lower temperature (room temperature) sputtering.

Further, according to the present invention, the polarizing plate and the retarder, which are provided as a separate film and adhered using a separate additive, are integrally formed with the composite polarizing plate, thereby a thin structure of the flexible display may be obtained.

FIG. 2 schematically illustrates a structure in which a polarizing plate 200 and a retarder 300 are formed in a single layer, respectively. The single polarizing plate may be formed of a polarizer film or a polarizer coating layer.

Any polarizers used in the related art may be adopted to the polarizer film without particular limitation thereof. For example, a film made of a polyvinylalcohol resin having a dichroic dye adsorbed and oriented thereon may be used as the polarizer. Such a polyvinylalcohol resin forming the polarizer may include polyvinyl acetate as a homopolymer of vinyl acetate, as well as a copolymer of vinyl acetate and any other monomer copolymerizable therewith. Such a monomer copolymerizable with vinyl acetate may include, for example, unsaturated carboxylic acid monomers, unsaturated sulfonic acid monomers, olefin monomers, vinyl ether monomers, ammonium group-containing acrylamide monomers, or the like. A thickness of the polarizer is not particularly limited, and the polarizer may be manufactured so as to have any conventional thickness used in the related art.

In addition, the polarizer coating layer may be formed by applying a polymer solution containing a polymer resin and a dichroic material. Preferably, the polarizer coating layer is used when the polarizing plate is formed in a single polarizer layer.

The polymer resin for forming the polarizer coating layer may representatively use, for example, a polyvinylalcohol resin. The polyvinylalcohol resin may be a polyvinylalcohol resin prepared by saponification of a polyvinyl acetate resin. Such a polyvinyl acetate resin may include polyvinyl acetate as a homopolymer of vinyl acetate, as well as a copolymer of vinyl acetate and any other monomer copolymerizable therewith. Such a monomer copolymerizable with vinyl acetate may include, for example, unsaturated carboxylic acid monomers, unsaturated sulfonic acid monomers, olefin monomers, vinyl ether monomers, ammonium group-containing acrylamide monomers, and the like.

Also, the polyvinyl alcohol resin may include modified resin, for example, aldehyde-modified polyvinylformal or polyvinylacetal.

The polarizer layer may be formed by a film prepared by mixing a polyvinyl alcohol resin with a dichroic material and applying the mixed solution in a film.

The single retarder layer also may be formed by a retarder film of a retarder coating layer. Any films used in the related art may be adopted to the retarder film without particular limitation thereof, and for example, a stretched polymer film may be used. In addition, the retarder coating layer may be prepared by applying a polymer solution containing a reactive liquid crystal monomer.

When both of the polarizing plate 200 and the retarder 300 are formed in a single layer, there is an advantage that the thinnest thin structure may be formed.

According to a specific example of the first embodiment of the present invention, the polarizing plate 200 may be a laminate of a polarizer 210 and a protective film 220. FIG. 3 schematically illustrates a structure of the polarizing plate 200 according to the specific example of the first embodiment of the present invention

Films having excellent properties such as transparency, mechanical strength, thermal stability, moisture-shielding properties, isotropic properties, or the like, may be used as the protective film 220. More particularly, there is a film prepared of a thermoplastic resin including, for example: a polyester resin such as polyethylene terephthalate, polyethylene isophthalate, polyethylene naphthalate, polybutylene terephthalate, etc.; a cellulose resin such as diacetyl cellulose, triacetyl cellulose, etc.; a polycarbonate resin; an acryl resin such as polymethyl (meth)acrylate, polyethyl (meth)acrylate, etc.; a styrene resin such as polystyrene, acrylonitrile-styrene copolymer, etc.; a polyolefin resin such as polyethylene, polypropylene, a polyolefin having a cyclo- or norbonene structure, ethylenepropylene copolymer, etc.; a vinyl chloride resin; an amide resin such as nylon, an aromatic polyamide, etc.; an imide resin; a polyethersulfone resin; a sulfone resin; a polyetheretherketone resin; a polysulfide phenylene resin; a vinyl alcohol resin; a vinylidene chloride resin; a vinylbutyral resin, an allylate resin; a polyoxymethylene resin; an epoxy resin, and the like. Additionally, a film including a blend of the above thermoplastic resins may also be used. Alternatively, a film prepared of a thermosetting resin such as (meth)acryl, urethane, acrylurethane, epoxy or silicon resins, etc. or UV-curable resins may be used.

The thermoplastic resin of the polarizer protective film may be included in an amount of 50 to 100 wt.%, preferably, 50 to 99 wt.%, more preferably, 60 to 98 wt.%, and most preferably, 70 to 97 wt.% to a total weight of the polarizer protective film. If a content of the thermoplastic resin is less than 50 wt.%, a high transparency inherently included in the thermoplastic resin may not be sufficiently expressed.

The transparent protective film described above may include at least one suitable additive. The additive may include, for example, UV-absorbers, antioxidants, lubricants, plasticizers, releasing agents, anti-coloring agents, flame retardants, nucleating agents, antistatic agents, pigments, colorants, and the like.

Optionally, the polarizer protective film may be surface treated. Such a surface treatment may include a drying process such as plasma processing, corona treatment, primer processing, etc., or chemical treatment such as alkalization including saponification.

In the present specific example, the retarder 300 may be formed by coating it on the protective film 220 of the polarizing plate. In addition, the polarizer 210 may be a polarizer film or polarizer coating layer.

According to the present specific example, the protective film 220 supports the polarizer 210 as well as plays a role of a base film for the retarder 300, and also functions to maintain a stiffness of the composite polarizing plate 1.

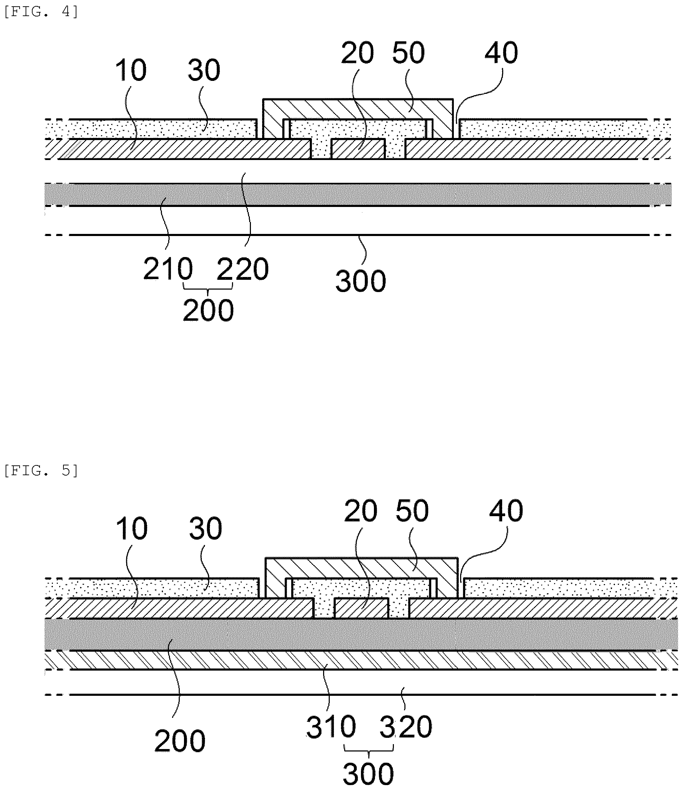

FIG. 4 schematically illustrates a structure in which a laminating sequence of the polarizer 210 and the protective film 220 is opposite to that of FIG. 3. In the present specific example, the touch sensing electrode is formed on the protective film 220, and the retarder 300 is directly adhered to the polarizer 210.

According to the present specific example, since the touch sensing electrode is formed on the protective film 220, there is an advantage that the touch sensing electrode may be more stably formed.

According to a fourth specific example, the retarder 300 may be a laminate of a base film 320 and a hardened liquid crystal layer 310. FIG. 5 schematically illustrates a structure of the retarder 300. In the present invention, the base film 320 may be a conventional protective film, an alignment film for inducing an orientation of liquid crystalline compounds, and a laminate of the protective film and the alignment film.

The protective film used as the base film 320 may use the film used in the above-described protective film of the polarizer within the same category, and any alignment film used in the related art may be adopted to the alignment film without particular limitation thereof.

According to the present specific example, the polarizing plate 200 is formed by directly coating it on the hardened liquid crystal layer 310 of the retarder.

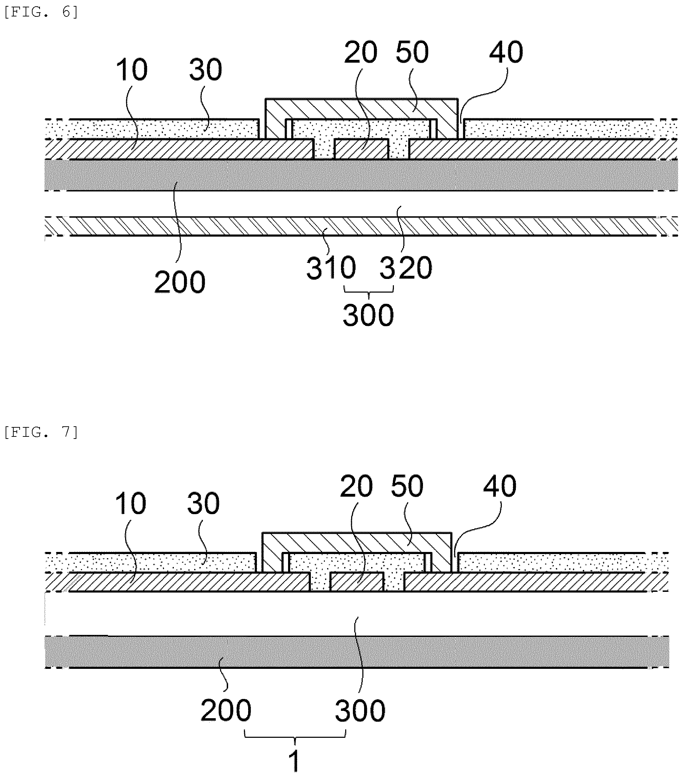

FIG. 6 schematically illustrates a structure in which the laminating sequence of base film 320 and the hardened liquid crystal layer 310 is opposite to that of FIG. 5. In the present specific example, the polarizing plate 200 is formed by coating it on the base film 320 of the retarder.

According to the present specific example, the base film 320 of the present invention supports the hardened liquid crystal layer 310 as well as plays a role of a base film for the applied polarizing plate 200, and also functions to maintain the stiffness of the composite polarizing plate 1.

### Examples not covered by the claims

FIG. 7 schematically illustrates a composite polarizing plate-integrated touch sensing electrode according to a specific example. The composite polarizing plate-integrated touch sensing electrode according to the specific example has the same structure as the first specific example disclosed in figure 2, except that the laminating sequence is different therefrom.

Herein, the polarizing plate 200 and the retarder 300 have the same laminated structure as the first embodiment or previous examples not covered by the claims, and a specific description thereof will not be described by substituting the description for the specific structure thereof.

### Second embodiment or example not covered by the claims

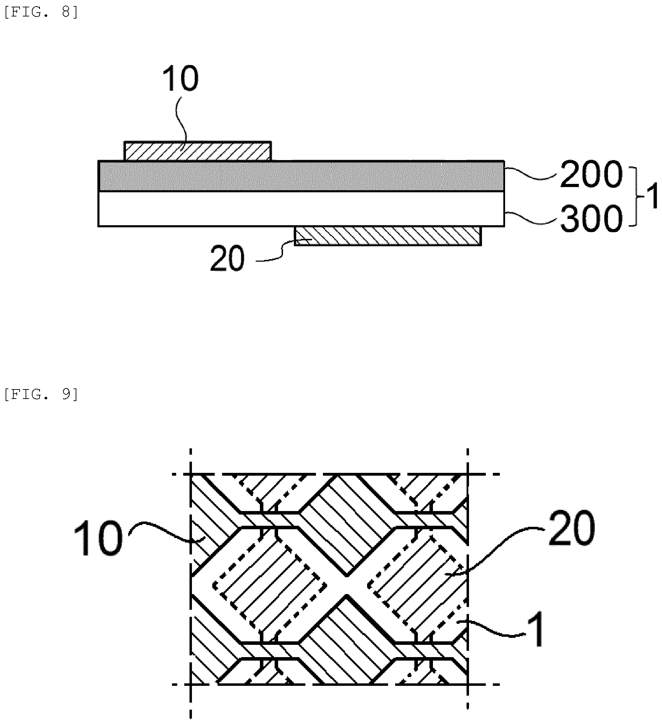

FIG. 8 schematically illustrates a composite polarizing plate-integrated touch sensing electrode.

Referring to FIG. 8, the composite polarizing plate-integrated touch sensing electrode has a structure in which a first sensing pattern 10 and a second sensing pattern 20 are formed on different surfaces of the composite polarizing plate 1 from each other. As described above, if the first sensing pattern 10 and the second sensing pattern 20 are formed on different surfaces of the composite polarizing plate 1 from each other, since the first sensing pattern 10 and the second sensing pattern 20 are isolated from each other by the composite polarizing plate 1, there is no need to provide a separate insulation layer therebetween, and thereby a thin structure of the flexible display may be implemented.

In addition, FIG. 9 is a schematic plan view of the composite polarizing plate-integrated touch sensing electrode illustrated in FIG. 8. Referring to FIG. 9, when the first sensing pattern 10 and the second sensing pattern 20 are formed on the same plane, as illustrated in FIGS. 1 and 2, the bridge electrode 50 is required. However, the first and second sensing patterns 10 and 20 are disposed on the different surfaces of the composite polarizing plate 1 from each other. Therefore, the respective first and second sensing patterns 10 and 20 have an electrically connected structure without the bridge electrodes 50. Accordingly, it is possible to achieve the thin structure of the flexible display, and significantly decrease the manufacturing process of the touch sensing electrode.

In the present specific example, the composite polarizing plate-integrated touch sensing electrode has a structure in which both of the polarizing plate 200 and the retarder 300 are formed in a single layer, and a configuration relating to the polarizing plate 200 and the retarder 300 described before may be similarly applied thereto.

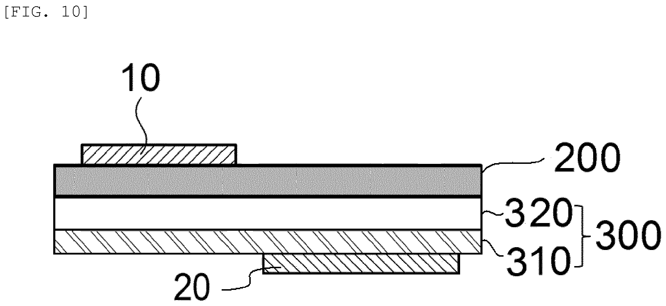

In addition, the polarizing plate 200 and the retarder 300 have the same laminated structure as the first embodiment or previous examples not covered by the claims, and a specific description thereof will not be described by substituting the description for the specific structure thereof. For reference, FIG. 10 schematically illustrates a structure in which a retarder 300 of the composite polarizing plate 1 is formed of a laminate of a hardened liquid crystal layer 310 and a base film 320.

### Refractive index

The composite polarizing plate-integrated touch sensing electrode may have more improved visibility by adjusting a refractive index difference between the composite polarizing plate and the sensing electrode.

For example, a difference in refractive indices between the composite polarizing plate and the sensing pattern provided on one surface of the composite polarizing plate may be 0.8 or less. If a difference in reflectance between the sensing pattern and the environment thereof is increased due to the sensing pattern having a high refractive index, the sensing pattern may be visually identified from an outside, and thereby visibility may be deteriorated. In consideration of this, according to the present invention, since the refractive index difference between the composite polarizing plate and the sensing pattern provided on one surface of the composite polarizing plate is controlled to be 0.8 or less, the difference in refractive indices between the sensing patterns and the composite polarizing plate is minimized, and thereby visibility may be more improved. A specific value of the refractive index may be controlled by any method known in the related art depending on a thickness of each layer, a type of the material, or the like. In this aspect, preferably, the sensing pattern has a refractive index of 1.3 to 2.5. If the sensing pattern has a refractive index within the above described range, the difference in refractive indices between the sensing pattern and the composite polarizing plate may be easily included within the range of the present invention, and effects of improving visibility may be more increased.

The composite polarizing plate-integrated touch sensing electrode of the present invention having the above described configuration may further include a structure in which an adhesive layer and a release film are sequentially laminated on at least one surface thereof so as to facilitate managing in subsequent transportation and adhesion with other parts.

The composite polarizing plate-integrated touch sensing electrode of the present invention may be used to form a touch screen panel by an additional process known in the related art.

For example, the composite polarizing plate-integrated touch sensing electrode of the present invention may have optical functional films adhered to an upper portion and a lower portion thereof by an adhesive agent. In the present invention, the adhesive agent means an adhesive or a bonding agent. Further, in the present invention, the upper portion of the composite polarizing plate refers to a visible side based on the polarizing plate and the lower portion of the composite polarizing plate refers to a side opposite to the visible side based on the polarizing plate.

In this case, if the composite polarizing plate is provided with at least one sensing pattern on an upper surface thereof, preferably, the refractive index difference between the adhesive agent layer disposed on the upper portion and the sensing pattern of the upper surface is 0.3 or less in aspects of improving visibility of the sensing pattern. Since light emitted from a light source is incident to the adhesive agent layer and the sensing pattern before passing through the composite polarizing plate, it is not possible to decrease the refractive index of the sensing pattern unless the difference in refractive indices between the adhesive agent layer and the sensing pattern is 0.3 or less.

If the composite polarizing plate is provided with the sensing patterns on the upper and lower surface thereof (for example, the first sensing pattern on the upper surface and the second sensing pattern on the lower surface, respectively), it is preferable that the sensing pattern of the upper surface has a refractive index difference of 0.3 or less with the upper adhesive agent layer, and the sensing pattern of the lower surface has a refractive index difference of 0.8 or less with the upper adhesive agent layer. If the refractive index difference between the sensing pattern of the lower surface and the upper adhesive agent layer exceeds 0.8, visibility of the sensing pattern may be deteriorated. When both of the first sensing pattern and the second sensing pattern are provided on the lower surface of the composite polarizing plate, and the optical functional film is adhered to the upper surface of the composite polarizing plate by the adhesive agent, it is preferable that the refractive index difference between the adhesive agent layer and the sensing pattern of the lower surface is 0.8 or less. As described above, if the refractive index difference between the sensing pattern of the lower surface and the upper adhesive agent layer exceeds 0.8, visibility of the sensing pattern of the lower surface may be deteriorated.

The optical functional film which may be adhered to the composite polarizing plate-integrated touch sensing electrode of the present invention may, for example, include a window cover film, an anti-reflection film, an antifouling film, or the like, but it is not limited thereto.

The touch screen panel according to the present invention may be coupled to a liquid crystal display (LCD), an OLED, a flexible display, or the like.

### Preparative Example

First, a polarizing plate having a transmittance of 42% was formed by applying a coating type polarizer to one surface of a retarder film, and then, ITO was deposited on a surface opposite to the retarder to which the polarizer is applied at room temperature and then heat treated to prepare an ITO layer. Next, a touch pattern was formed with the ITO layer by using a photolithography process. Then, an insulation layer was formed on the touch pattern, and contact holes were formed in the insulation layer, and then, a wiring electrode and a bridge electrode were formed by depositing and etching a metal material. Finally, a window film was adhered to the coating type polarizer side to manufacture a touch module.

### Preparative Comparative Example

ITO was deposited on one surface of a PET base film at room temperature and then heat treated to form an ITO layer. Then, two touch electrode films were prepared by a method of preparing a touch pattern with the ITO layer by using a photolithography process, and forming a wiring electrode by depositing and etching a metal material, then the prepared two touch electrode films were adhered to each other to prepare a FF type touch sensor. Thereafter, the prepared touch sensor is adhered between a window film and a polarizing plate, and a retarder is adhered to a side opposite to the side of the polarizing plate on which the touch sensor is formed to manufacture a touch module.

### Experimental Example

Each of the touch modules fabricated in the preparative example and preparative comparative example was subjected to the following experiments.

### A. Dynamic bending test

Left and right repeated bending test was performed with a radius R of 3 mm by using a Bending Tester (MIT). Herein, a sample having a width of 10 mm and a length of 150 mm was used, and a broken point and peeling-off between the film layers were measured during the repeated bending test of 50,000 times.

### B. Measurement of thickness

A total thickness of the touch module prepared by the above-described method was measured by using a micrometer, and results thereof are shown in Table 1 below.

**[TABLE 1]**

| | Preparative example | Preparative comparative example |
|---|---|---|
| Total thickness | 55 µm | 600 µm |
| Number of bending (Layer peeled-off) | 50,000 times (Not peeled-off) | Peeled off at 3,500 times |
| Number of bending (Film broken) | 50,000 times (Not broken) | Broken at 4,800 times |

### Examples 1 to 10

Composite polarizing plate-integrated touch sensing electrodes have been prepared with refractive index as listed in the following Table 2. Then, average reflectance was measured for each position of a pattern part and a non-pattern part. Herein, the pattern part is a part on which the sensing pattern is formed and the non-pattern part is a part on which the sensing pattern is not formed (that is, a part to which an insulation layer or retarder is exposed.).

The average reflectance means an average of reflectance within a range of 400 nm to 700 nm.

**[TABLE 2]**

| | Composite polarizing plate | | First sensing pattern | | Insulation layer | | Second sensing pattern | | ΔRefractive index (%) (Electrode/base film) | |
|---|---|---|---|---|---|---|---|---|---|---|
| | Type | Refractive index | Position | Refractive index | Position | Refractive index | Position | Refractive index | Primary electrode | Secondary electrode |
| Example 1 | a-1 | 1.53 | Base film One surface | 1.56 | Base film One surface | 1.51 | Base film One surface | 1.56 | 0.009 | 0.009 |
| Example 2 | a-1 | 1.53 | Base film One surface | 1.58 | Base film One surface | 1.51 | Base film One surface | 1.58 | 0.026 | 0.026 |
| Example 3 | a-2 | 1.58 | Base film One surface | 1.64 | Base film One surface | 1.51 | Base film One surface | 1.64 | 0.035 | 0.035 |
| Example 4 | a-1 | 1.53 | Base film One surface | 1.56 | - | - | Base film Two surfaces | 1.58 | 0.009 | 0.025 |
| Example 5 | a-2 | 1.58 | Base film One surface | 1.56 | - | - | Base film Two surfaces | 1.64 | 0.004 | 0.035 |
| Example 6 | a-2 | 1.58 | Base film One surface | 1.56 | - | - | Base film Two surfaces | 1.72 | 0.004 | 0.18 |
| Example 7 | a-1 | 1.53 | Base film One surface | 2.36 | Base film One surface | 1.51 | Base film One surface | 2.36 | 4.5 | 4.5 |
| Example 8 | a-2 | 1.58 | Base film One surface | 2.4 | Base film One surface | 1.51 | Base film One surface | 2.4 | 4.2 | 4.2 |
| Example 9 | a-1 | 1.53 | Base film One surface | 2.38 | - | - | Base film Two surfaces | 2.4 | 4.6 | 4.9 |
| Example 10 | a-2 | 1.58 | Base film One surface | 2.4 | - | - | Base film Two surfaces | 2.42 | 4.2 | 4.4 |
| Composite polarizing plate | | | | | | | | | | |
| a-1: Polarizing plate having a retarder of polycarbonate film adhered thereto | | | | | | | | | | |
| a-2: Polarizing plate having a coating type retarder adhered thereto | | | | | | | | | | |
| First sensing pattern: ITO | | | | | | | | | | |
| Second sensing pattern: ITO | | | | | | | | | | |
| Insulation layer: Organic insulation layer | | | | | | | | | | |
| The refractive index and the extinction coefficient are based on light having a wavelength of 550 nm. | | | | | | | | | | |

Referring to Table 2 above, when the refractive index difference between the composite polarizing plate and the sensing pattern is 0.8 or less, the visibility is more excellent than a case of being out of the above-described range.

### [Description of Reference Numerals]

- 10:: first sensing pattern, 20: second sensing pattern
- 30:: insulation layer
- 40:: contact hole, 50: bridge electrode
- 200:: polarizing plate
- 210:: polarizer, 220: polarizer protective film
- 300:: retarder
- 310:: hardened liquid crystal layer, 320: base film

## Claims

1. A method of manufacturing a touch screen panel including composite polarizing plate-integrated touch sensing electrode comprising:
providing a transparent protective film (220); coating a retarder (300) directly on a lower surface of the transparent protective film (220);
coating a polarizer (210) directly on an upper surface of the transparent protective film (220); and
forming at least one sensing pattern (10, 20) directly on the polarizer (210),
wherein the retarder (300), the transparent protective film (220) and the polarizer (210) form a composite polarizing plate (1).

2. The method according to claim 1, wherein the composite polarizing plate (1) includes a first sensing pattern (10) and a second sensing pattern (20), and both of said first sensing pattern (10) and said second sensing pattern (20) are formed on only one surface of the composite polarizing plate (1).

3. The method according to claim 1, wherein the composite polarizing plate (1) includes a first sensing pattern (10) and a second sensing pattern (20), wherein the first sensing pattern (10) is formed on one surface of the composite polarizing plate (1), and the second sensing pattern (20) is formed the other surface of the composite polarizing plate (1).

4. The method according to claim 1, wherein a refractive index difference between the composite polarizing plate (1) and the sensing pattern (10, 20) provided on one surface of the composite polarizing plate is 0.8 or less.

5. The method according to claim 1, wherein the sensing pattern (10, 20) has a refractive index of 1.3 to 2.5.

6. The method according to claim 1, wherein the composite polarizing plate (1) includes a first sensing pattern (10) and a second sensing pattern (20) on one surface thereof, an insulation layer (30) formed on the sensing patterns (10, 20), and a bridge electrode (50) formed on the insulation layer (30) which electrically connects the first sensing patterns (10) which are separately formed.

7. The method according to claim 3, wherein the first sensing pattern (10) and the second sensing pattern (20) are electrically isolated from each other by the composite polarizing plate (1).

8. The method according to claim 1, wherein the composite polarizing plate-integrated touch sensing electrode includes at least one sensing pattern (10, 20) formed on an upper surface of a composite polarizing plate (1), and an optical functional film is adhered thereon by an adhesive agent layer, and a refractive index difference between the adhesive agent layer and the sensing pattern (10) of the upper surface of the composite polarizing plate (1) is 0.3 or less, wherein the optical functional film includes at least one of a window cover film, an anti-reflection film and an antifouling film.

9. The method according to claim 8, wherein a refractive index difference between the adhesive agent layer and a sensing pattern (20) provided on a lower surface of the composite polarizing plate (1) is 0.8 or less.

10. The method according to claim 1, wherein the composite polarizing plate-integrated touch sensing electrode includes a first sensing pattern (10) and a second sensing pattern (20) formed on the lower surface of the composite polarizing plate (1), and an optical functional film adhered on the upper surface of the composite polarizing plate (1) by an adhesive agent layer, and a refractive index difference between the adhesive agent layer and the sensing pattern (20) of the lower surface of the composite polarizing plate (1) is 0.8 or less,
wherein the optical functional film includes at least one of a window cover film, an anti-reflection film and an antifouling film.

11. The method according to claim 1, wherein the touch screen panel is adhered to a flexible display.

## Patentansprüche

1. Verfahren zur Herstellung eines Berührbildschirms mit einer in eine Verbundplatte integrierten berührungsempfindlichen Elektrode, umfassend:
Bereitstellen einer transparenten Schutzschicht (220);
Aufbringen eines Retarders (300) unmittelbar auf eine Unterseite der transparenten Schutzschicht (220);
Aufbringen eines Polarisierers (210) unmittelbar auf eine Oberseite der transparenten Schutzschicht (220); und
Bilden von zumindest einem Sensiermuster (10, 20) unmittelbar auf dem Polarisierer (210);
wobei der Retarder (300), die transparente Schutzschicht (220) und der Polarisierer (210) eine Polarisationsverbundplatte (1) bilden.

2. Verfahren nach Anspruch 1, wobei die Polarisationsverbundplatte (1) ein erstes Sensiermuster (10) und ein zweites Sensiermuster (20) aufweist, und sowohl das erste Sensiermuster (10) als auch das zweite Sensiermuster (20) nur auf einer Oberfläche der Polarisationsverbundplatte (1) gebildet sind.

3. Verfahren nach Anspruch 1, wobei die Polarisationsverbundplatte (1) ein erstes Sensiermuster (10) und ein zweites Sensiermuster (20) aufweist, wobei das erste Sensiermuster (10) auf einer Oberfläche der Polarisationsverbundplatte (1) gebildet ist, und das zweite Sensiermuster (20) auf der anderen Oberfläche der Polarisationsverbundplatte (1) gebildet ist.

4. Verfahren nach Anspruch 1, wobei eine Brechungsindex-Differenz zwischen der Polarisationsverbundplatte (1) und dem Sensiermuster (10, 20), das an einer Oberfläche der Polarisationsverbundplatte bereitgestellt ist, 0,8 oder weniger beträgt.

5. Verfahren nach Anspruch 1, wobei das Sensiermuster (10, 20) einen Brechungsindex von 1,3 bis 2,5 hat.

6. Verfahren nach Anspruch 1, wobei die Polarisationsverbundplatte (1) ein erstes Sensiermuster (10) und ein zweites Sensiermuster (20) auf einer Oberfläche derselben, eine auf den Sensiermustern (10, 20) gebildete Isolierschicht (30), und eine auf der Isolierschicht (30) gebildete Brückenelektrode (50) aufweist, die die ersten, getrennt ausgebildeten Sensiermuster (10) elektrisch miteinander verbindet.

7. Verfahren nach Anspruch 3, wobei das erste Sensiermuster (10) und das zweite Sensiermuster (20) durch die Polarisationsverbundplatte (1) elektrisch voneinander getrennt sind.

8. Verfahren nach Anspruch 1, wobei die in eine Verbundplatte integrierte berührungsempfindliche Elektrode zumindest ein Sensiermuster (10, 20) aufweist, das auf einer Oberseite einer Polarisationsverbundplatte (1) gebildet ist, und eine optische Funktionsfolie durch eine Haftvermittlerschicht an dieser anhaftet, und eine Brechungsindex-Differenz zwischen der Haftvermittlerschicht und dem Sensiermuster (10) der Oberseite der Polarisationsverbundplatte (1) 0,3 oder weniger beträgt,
wobei die optische Funktionsfolie eine Fensterabdeckfolie und/oder eine Antireflexionsfolie und/oder eine Antifoulingfolie umfasst.

9. Verfahren nach Anspruch 8, wobei eine Brechungsindex-Differenz zwischen der Haftvermittlerschicht und einem Sensiermuster (20), das auf einer Unterseite der Polarisationsverbundplatte (1) bereitgestellt ist, 0,8 oder weniger beträgt.

10. Verfahren nach Anspruch 1, wobei die in eine Verbundplatte integrierte berührungsempfindliche Elektrode ein erstes Sensiermuster (10) und ein zweites Sensiermuster (20) aufweist, das an der Unterseite der Polarisationsverbundplatte (1) gebildet ist, und eine optische Funktionsfolie, die an der Oberseite der Polarisationsverbundplatte (1) durch eine Haftvermittlerschicht anhaftet, und eine Brechungsindex-Differenz zwischen der Haftvermittlerschicht und dem Sensiermuster (20) der Unterseite der Polarisationsverbundplatte (1) 0,8 oder weniger beträgt, wobei die optische Funktionsfolie eine Fensterabdeckfolie und/oder eine Antireflexionsfolie und/oder eine Antifoulingfolie umfasst.

11. Verfahren nach Anspruch 1, wobei der Berührbildschirm an einer flexiblen Anzeige anhaftet.

## Revendications

1. Procédé de fabrication d'un panneau d'écran tactile comportant une électrode de détection tactile intégrée à une plaque de polarisation composite, le procédé comprenant :
la fourniture d'un film protecteur transparent (220) ;
l'application d'un retardateur (300) directement sur une surface inférieure du film protecteur transparent (220) ;
l'application d'un polariseur (210) directement sur une surface supérieure du film protecteur transparent (220) ; et
la formation d'un moins un motif de capteur (10, 20) directement sur le polariseur (210),
le retardateur (300), le film protecteur transparent (220) et le polariseur (210) formant une plaque de polarisation composite (1).

2. Le procédé selon la revendication 1, dans lequel la plaque de polarisation composite (1) comprend un premier motif de capteur (10) et un second motif de capteur (20), et ledit premier motif de capteur (10) et ledit second motif de capteur (20) sont tous les deux formés uniquement sur une surface de la plaque de polarisation composite (1).

3. Le procédé selon la revendication 1, dans lequel la plaque de polarisation composite (1) comprend un premier motif de capteur (10) et un second motif de capteur (20), le premier motif de capteur (10) étant formé sur une surface de la plaque de polarisation composite (1), et le second motif de capteur(20) étant formé sur l'autre surface de la plaque de polarisation composite (1).

4. Le procédé selon la revendication 1, dans lequel une différence d'indice de réfraction entre la plaque de polarisation composite (1) et le motif de capteur (10, 20) agencé sur une surface de la plaque de polarisation composite est égale ou inférieure à 0,8.

5. Le procédé selon la revendication 1, dans lequel le motif de capteur (10, 20) présente un indice de réfraction compris entre 1,3 et 2,5.

6. Le procédé selon la revendication 1, dans lequel la plaque de polarisation composite (1) comprend un premier motif de capteur (10) et un second motif de capteur (20) sur l'une de ses surfaces, une couche isolante (30) formée sur les motifs de détection (10, 20), et une électrode de pont (50) formée sur la couche isolante (30) qui connecte électriquement les premiers motifs de détection (10) formés séparément.

7. Le procédé selon la revendication 3, dans lequel le premier motif de capteur (10) et le second motif de capteur (20) sont isolés électriquement l'un de l'autre au moyen de la plaque de polarisation composite (1).

8. Le procédé selon la revendication 1, dans lequel l'électrode de détection tactile intégrée à la plaque de polarisation composite comprend au moins un motif de capteur (10, 20) formé sur une surface supérieure de la plaque de polarisation composite (1), et un film fonctionnel optique est adhéré sur le motif de capteur à l'aide d'une couche d'agent adhésif, et une différence d'indice de réfraction entre la couche d'agent adhésif et le motif de capteur (10) de la surface supérieure de la plaque de polarisation composite (1) est égale ou inférieure à 0,3,
le film fonctionnel optique comprenant un film de couverture à fenêtre, et/ou un film antireflet, et/ou un film antisalissure.

9. Le procédé selon la revendication 8, dans lequel une différence d'indice de réfraction entre la couche d'agent adhésif et un motif de capteur (20) prévu sur une surface inférieure de la plaque de polarisation composite (1) est égale ou inférieure à 0,8.

10. Le procédé selon la revendication 1, dans lequel l'électrode de détection tactile intégrée à la plaque de polarisation composite comprend un premier motif de capteur (10) et un second motif de capteur (20) formés sur la surface inférieure de la plaque de polarisation composite (1), et un film fonctionnel optique adhéré sur la surface supérieure de la plaque de polarisation composite (1) à l'aide d'une couche d'agent adhésif, et une différence d'indice de réfraction entre la couche d'agent adhésif et le motif de capteur (20) de la surface inférieure de la plaque de polarisation composite (1) est égale ou inférieure à 0,8,
le film fonctionnel optique comprenant un film de couverture à fenêtre, et/ou un film antireflet, et/ou un film antisalissure.

11. Le procédé selon la revendication 1, dans lequel le panneau d'écran tactile est adhéré à une unité d'affichage flexible.
